# EUROPEAN PATENT APPLICATION

(11) **EP 1 838 018 A2**
(43) Date of publication of application: **26.09.2007**
(21) Application number: 07006105.6
(22) Date of filing: 23.03.2007
(51) Int. Cl.: H04H 1/00

(54) **Method and apparatus for transmitting/receiving broadcast service in a DVB-H CBMS system**

(30) Priority: 28.07.2006 US 833813 P; 15.09.2006 US 844671 P; 24.03.2006 KR 20060027181; 12.02.2007 KR 20070014345
(71) Applicant: Samsung Electronics Co., Ltd., Suwon-si 443-742 Gyeonggi-do (KR)
(72) Inventor: Xu, Yiling, Suwon-si Gyeonggi-do 443-742 (KR); Lee, Kook-Heui, Suwon-si Gyeonggi-do 443-742 (KR); Song, Jae-Yeon, Suwon-si Gyeonggi-do 443-742 (KR); Ann, Jong-Hoon, Suwon-si Gyeonggi-do 443-742 (KR)
(74) Representative: Grünecker, Kinkeldey, Stockmair & Schwanhäusser Anwaltssozietät

(57) **Abstract**

A method for providing a broadcast service to a terminal by a network in a Digital Video Broadcasting-Handheld (DVB-H) Convergence of Broadcasting and Mobile Service (CBMS) system. The method includes generating Program Specific Information/Service Information (PSI/SI) indicative of information related to a broadcast service requested by the terminal; generating mapping information for information on the broadcast service in an Internet Protocol (IP) platform from which the terminal is currently receiving the broadcast service, and for information on a broadcast service corresponding to the broadcast service in IP platforms other than the IP platform; and including the generated mapping information in an IP/Medium Access Control (MAC) Information Notification Table (INT) of the PSI/SI, and delivering the INT to the terminal.

## Description

### BACKGROUND OF THE INVENTION

### 1. Field of the Invention

The present invention relates generally to a Digital Video Broadcasting-Handheld (DVB-H) Convergence of Broadcasting and Mobile Service (CBMS) system, and in particular, to a method and apparatus capable of conveniently searching for desired services by a terminal.

### 2. Description of the Related Art

DVB-H CBMS is a service that provides convenient functions through a combination of digital television (TV) broadcast service having high mobile reception performance, and mobile communication. As analog TVs have recently been replaced with digital TVs, users can now enjoy TV services having High Definition TV (HDTV)-class high image quality and Compact Disc (CD)-class high sound quality in their living rooms. On the other hand, diversified present-day life styles have changed existing activities and life patterns of televiewers, and as portable devices, such as mobile phones, Personal Digital Assistants (PDAs), notebook computers, etc., have been popularized, there is an increasing need to enjoy high-quality TV services while on the move. In addition, many attempts have been made to overcome the limit of broadcast networks that have no reverse channel, through a combination with mobile communication, and DVB-H CBMS is the result of the attempts.

DVB-H CBMS, a system provided for mobile receiving terminals capable of using mobile communication channels, includes a handover concept supported in a cellular wireless communication system like a conventional mobile communication system. However, handover in broadcast networks is different from handover in mobile communication networks that always manage subscribers. As to handover of mobile communication systems, networks, while managing individual users, receive measurement reports from terminals for network management including handover. However, in general broadcast systems, broadcast service providers provide services and contents, but do not manage individual users. That is, broadcast service providers send information for broadcast reception to all users via broadcast networks, and have no user management function. Therefore, handover for broadcast networks needs unique technology distinguished from that of handover for mobile communication systems.

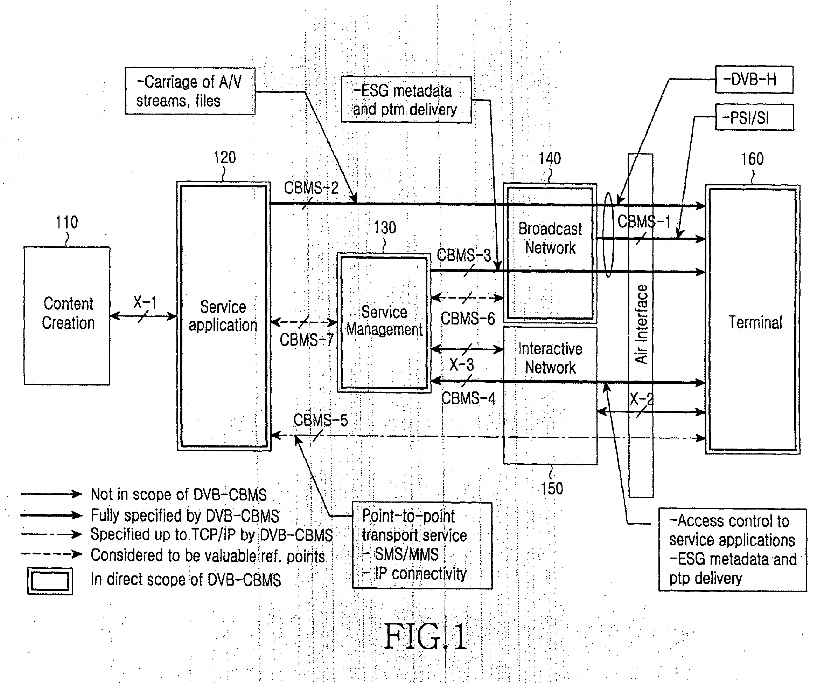

FIG. 1 shows a general DVB-H system. The illustrated entities are logical entities which are physically distinguishable or undistinguishable, and the logical entities can be merged into one or more physical entities. In addition, only interfaces related to the present invention are shown herein. The system shown in FIG. 1 is for Digital Video Broadcasting - Convergence of Broadcasting and Mobile Service (DVB-CBMS), which is one of the mobile broadcast terminal standard groups. Although the present invention will be described with reference to the DVB-CBMS based notification broadcast architecture by way of example, the present invention may operate in a similar manner in other mobile broadcast systems having a notification message function.

Referring to FIG. 1, a Content Creation (CC) 110 is a provider of a broadcast service, and the broadcast service may include a conventional audio/video broadcast service, file (music/data file) download service, and the like. The Content Creation 110 notifies a change to a Notification Event Function (NEF), not shown, in a Service Application (SA) 120 when there is any problem or change in provisioning of the broadcast service.

The Service Application 120 takes charge of processing content data of the broadcast service provided from the Content Creation 110 in the form (for example, streaming audio/video or movie download) suitable for broadcast networks to generate broadcast service data, generating standardized metadata necessary for Electronic Service Guide (ESG), and generating charging information for users. In addition, the Service Application 120 delivers the change in the broadcast service, notified from the Content Creation 110, to a Notification Generation Function (NGF), not shown, in a Service Management (SM) 130, and provides service guide attribute information used for generation of a notification message to the Notification Generation Function.

The Service Management 130 takes charge of determining a delivery schedule of the broadcast service provided from the Service Application 120, and generating a service guide. The Service Management 130 is connected to a Broadcast Network 140 capable of providing the broadcast service, and an Interactive Network 150 supporting interactive communication.

The Service Management 130 manages subscriber information for reception of the broadcast service, service provisioning information, such as information indicating whether a subscriber has purchased a relevant service, and device information for terminals receiving the broadcast service, delivers user charging information to the Service Application 120, and provides subscription information, service provisioning information, and device information to the Broadcast Network 140 and the Interactive Network 150.

The Broadcast Network 140 is a network that delivers the broadcast service, and a DVB-H network will be used herein as an example of the Broadcast Network 140.

The Interactive Network 150 delivers the broadcast service on a point-to-point basis, or exchanges control information and additional information related to reception of the broadcast service on an interactive basis. For example, the Interactive Network 150 can be an existing cellular network, such as a 3rd Generation Partnership Project (3GPP) Wideband Code Division Multiple Access (WCDMA) network.

A Terminal 160, a terminal capable of receiving the broadcast service, has a function capable of accessing a cellular network according to terminal capability. The Terminal 160 is assumed as a terminal capable of accessing the cellular network.

A description will now be made of interfaces between entities of the mobile broadcast system.

CBMS-x refers to interfaces in IP Datacast over DVB-H, and X-x refers to interfaces not included in IP Datacast over DVB-H. Specifically, a CBMS-7 interface is an interface from the Service Application 120 to the Service Management 130, and a CBMS-3 interface is an interface used when a message is directly delivered from the Service Management 130 to the Terminal 160 via the Broadcast Network 140 over a broadcast channel. A CBMS-2 interface is an interface from the Service Application 120 to the Terminal 160, and a CBMS-5 interface is an interface for a point-to point transport service from the Service Application 160 to the Terminal 160. A CBMS-4 interface is an interface used when a message delivered from the Service Management 130 is directly delivered to the Terminal 160 via the Interactive Network 150 over a dedicated channel to the Terminal 160 or a broadcast channel provided by the Interactive Network 150. A CBMS-6 interface is an interface between the Service Management 130 and the Broadcast Network 140, used as a delivery path to be used in the Broadcast Network 140 by the Service Management 130, or used as a reception path for event information generated in the Broadcast Network 140. A CBMS-1 interface is an interface over which control signals of the broadcast network are delivered to terminals, and in DVB-H, a control signal channel, called Program Specific Information/Service Information (PSI/SI), corresponds to this interface. An X-3 interface is an interface used for establishment of a delivery path to be used between the Service Management 130 and the Interactive Network 150. An X-2 interface is an interface used for establishment of a delivery path to be used between the Terminal 160 and the Interactive Network 150. An X-1 interface is an interface used for establishment of a delivery path to be used between the Content Creation 110 and the Service Application 120.

If a user belonging to a DVB-H network has moved from a reference network to a neighboring network (destination network), or to another IP platform (destination IP platform), the destination network or destination IP platform should seamlessly provide the ongoing service to the user. The terminal should search the destination network for the ongoing program that the user was viewing before the handover, and then continuously receive the program. That is, when a transport stream changes, the terminal should search the destination network or destination IP platform for a transport stream in which the same service is provided, and when a transport frequency changes, the terminal should acquire frequency information of neighboring networks or neighboring IP platforms. The information needed for performing the above process can be acquired through PSI/SI provided by DVB broadcast networks. A handover procedure and method for this case is not related to the present invention, so a description thereof is not provided. Details are disclosed in European Telecommunications Standards Institute Technical Report (ETSI TR) 101 211 Digital Video Broadcasting (DVB); Guidelines on implementation and usage of Service information (SI).

The factor playing an important role in searching for the ongoing program in the above process can include a service identifier (ID). This concept is applied in the same manner even to the cell-to-cell movement, and the subcell-to-subcell movement. In addition, when the destination network or destination IP platform does not have the ongoing service that the user was viewing before, the terminal should search the destination network or destination IP platform for any replaceable service that can replace the ongoing service. The replaceable service refers to a service that is regionally different in content but equal in genre from/to the ongoing service, like the news service.

As described above, a DVB-H terminal, even though its location changes, can allow the user to seamlessly view the selected service, and can provide the necessary information to the user and the terminal itself.

However, according to the prior art, when service identifiers of a source network and a destination network are different from each other, the terminal cannot search for the correct service. Similarly, even when service identifiers of a source IP platform and a destination IP platform are different from each other, the terminal cannot search for the correct service. That is, when different networks or different IP platforms assign different service identifiers to the same service, the terminal may have difficulty in searching for a desired service in the destination network or destination IP platform.

### SUMMARY OF THE INVENTION

The present invention addresses at least the above-described problems and/or disadvantages and provides at least the advantages described below. Accordingly, an aspect of the present invention is to provide an apparatus and method for mapping inter-network service identifiers thereby providing information on a correct service that a terminal desires to search for after moving to another network in a DVB-H CBMS system.

Another aspect of the present invention is to provide an apparatus and method for providing service identifier mapping information between IP platforms using PSI/SI thereby providing information on the correct service that a terminal desires to search for after moving to another IP platform in a DVB-H CBMS system.

According to one aspect of the present invention, there is provided a method for providing a broadcast service to a terminal by a network in a DVB-H CBMS system. The method includes generating PSI/SI indicative of information related to a broadcast service requested by the terminal; generating mapping information for information on the broadcast service in an IP platform from which the terminal is currently receiving the broadcast service, and for information on a broadcast service corresponding to the broadcast service in IP platforms other than the IP platform; and including the generated mapping information in an IP/Medium Access Control (MAC) Information Notification Table (INT) of the PSI/SI, and delivering the INT to the terminal.

According to another aspect of the present invention, there is provided a method for receiving a broadcast service from a network by a terminal in a DVB-HCBMS system. The method includes receiving service mapping information between IP platforms by parsing an IP/MAC INT; determining to move to another network, and checking the received service mapping information; determining whether a broadcast service desired by the terminal is available in a current IP platform, and selecting another IP platform providing the desired broadcast service based on the service mapping information when the desired broadcast service is not available in the current IP platform; and turning to the selected IP platform and continuing to receive the desired broadcast service.

According to further another aspect of the present invention, there is provided a method for providing a broadcast service to a terminal by a network in a DVB-H CBMS system. The method includes generating an ESG indicative of information related a broadcast service requested by the terminal; generating mapping information for information on the broadcast service in an IP platform from which the terminal is currently receiving the broadcast service, and for information on a broadcast service corresponding to the broadcast service in IP platforms other than the IP platform; and including the generated mapping information in the ESG, and delivering the ESG to the terminal.

According to yet another aspect of the present invention, there is provided a method for receiving a broadcast service from a network by a terminal in a DVB-H CBMS) system. The method includes checking information on the broadcast service from an IP/MAC INT when receiving quality of the broadcast service decreases below a threshold; determining whether the broadcast service desired by the terminal is available in a current IP platform, and checking service mapping information from an ESG when the desired broadcast service is not available in the current IP platform; selecting another IP platform providing the desired broadcast service based on the service mapping information; and turning to the selected IP platform, and continuing to receive the desired broadcast service.

According to still another aspect of the present invention, there is provided a network apparatus for providing a broadcast service to a terminal in a DVB-H CBMS system. The network apparatus includes a service application unit for collecting contents from sources and their associated metadata to provide an application for a specific service; an ESG provision unit for generating an ESG for a broadcast service from the metadata collected from the service application unit; and a mobility management unit for managing movement to another network by the terminal. The network apparatus delivers service mapping information for a broadcast service, corresponding to the broadcast service currently received at the terminal, provided in another IP platform, to the terminal using one of PSI/SI and the ESG.

According to still another aspect of the present invention, there is provided a terminal apparatus for receiving a broadcast service from a network in a DVB-H CBMS system. The terminal apparatus includes a broadcast receiver for receiving a broadcast service or signal from a broadcast network; an interactive adaptor for receiving an interactive service or signal from an interactive network; and a mobility management unit for managing movement to another network. The terminal apparatus receives PSI/SI for the broadcast service through the broadcast receiver, receives an ESG for the broadcast service through the broadcast receiver or the interactive adaptor, and receives service mapping information for a broadcast service, corresponding to the broadcast service currently received at the terminal, provided in another IP platform, the service mapping information being included in one of the PSI/SI and the ESG.

### BRIEF DESCRIPTION OF THE DRAWINGS

The above and other aspects, features and advantages of the present invention will become more apparent from the following detailed description when taken in conjunction with the accompanying drawings in which:
FIG. 1 is a diagram illustrating a general DVB-H system;
FIG. 2 is a diagram illustrating an ESG structure of a general DVB-H system;
FIG. 3 is a diagram illustrating an acquisition fragment;
FIG. 4 is a diagram illustrating the handover concept in a general DVB-H system;
FIG. 5 is a diagram illustrating a general roaming procedure;
FIG. 6 is a diagram illustrating a roaming procedure according to the present invention;
FIGS. 7 to 9 are diagrams illustrating three types of time differences;
FIGS. 10 and 11 are diagrams illustrating INT including mapping information according to the present invention;
FIG. 12 is a diagram illustrating an operating procedure of a terminal according to a first embodiment of the present invention;
FIGS. 13 and 14 are diagrams illustrating different operating procedures of a terminal according to a second embodiment of the present invention;
FIG. 15 is a diagram of a network according to the present invention; and
FIG. 16 is a diagram of a terminal according to the present invention.

### DETAILED DESCRIPTION OF PREFERRED EMBODIMENTS

Preferred embodiments of the present invention will now be described in detail with reference to the drawings. In the following description, a description of known functions and configurations incorporated herein has been omitted for clarity and conciseness.

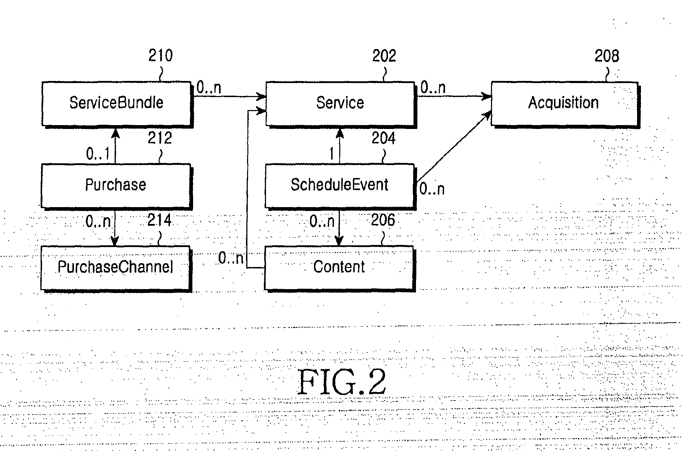

FIG. 2 shows an Electronic Service Guide (ESG) structure of a general Digital Video Broadcasting-Handheld (DVB-H) system. Components 202~214 indicate fragments of the ESG. That is, the ESG data model includes a service fragment 202, a schedule event fragment 204, a content fragment 206, an acquisition fragment 208, a service bundle fragment 210, a purchase fragment 212, and a purchase channel fragment 214.

The service fragment 202 includes a full description of the services, the schedule event fragment 204 indicates information on the time-depending services, and the acquisition fragment 208 includes information used for receiving actual data. The service bundle fragment 210 includes information on a service bundle combined of several services, the purchase fragment 212 provides price information for purchase of the service bundle, and the purchase channel fragment 214 provides information on the system that the terminal should use to acquire a right to purchase the service bundle.

Each of the fragments in the data model can make reference to the other fragments. The phrase 'making reference' refers to a process in which a fragment provides information related to the fragment itself using information delivered from another fragment. That is, when one service is composed of several contents, the service fragment includes only a full description of the service, for example, service name, service language, etc., but does not include a description of contents delivered through the service, and merely makes reference to a content fragment of the corresponding contents. In addition, in order to acquire various information needed to receive the service, for example, session information used for a protocol delivered, the terminal should receive and restore the acquisition fragment, to which reference is made by the service fragment. A role of the ESG is to provide information on the service being provided to users. In addition, the ESG includes information for terminals, like the purchase channel fragment 214.

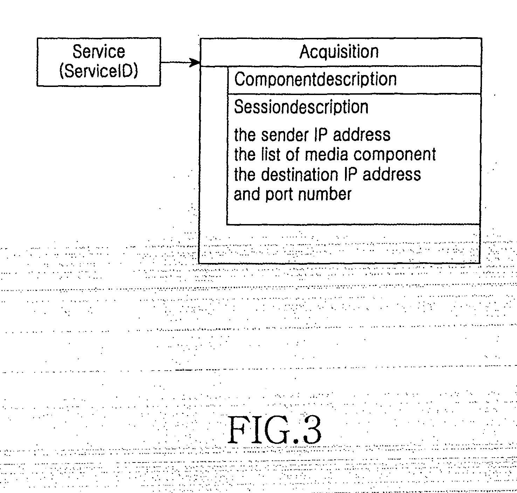

FIG. 3 shows an acquisition fragment according to the prior art. In an acquisition phase, session description files contain information used by the terminal to receive service contents.

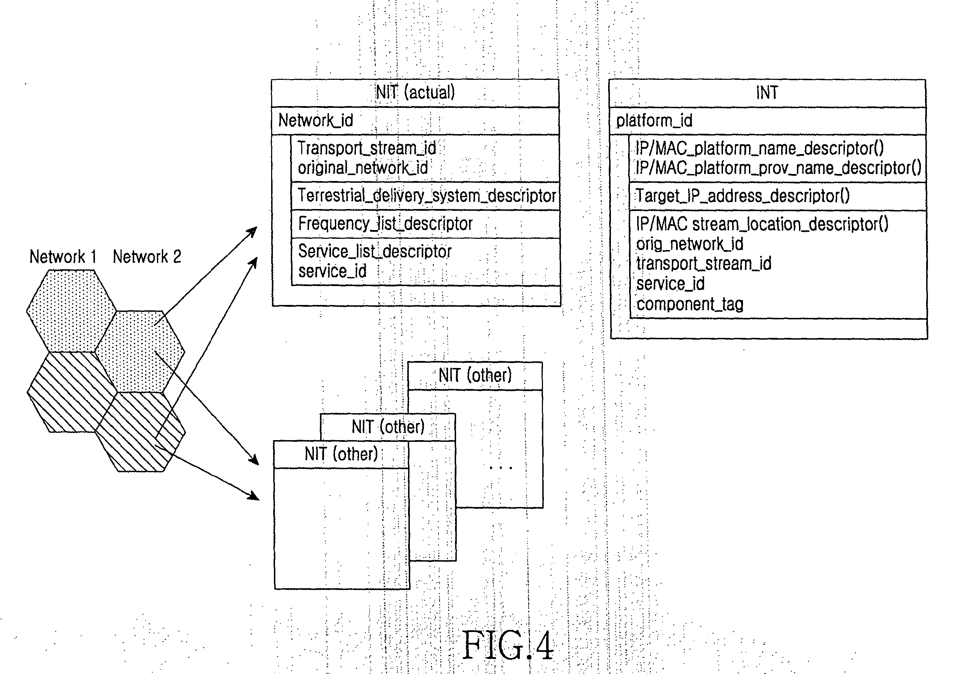

FIG. 4 shows a handover concept in a general DVB-H system. In a network composed of multiple cells, for each transport stream, the center frequency used in one cell is provided in terrestrial_delivery_system_descriptor, and the other frequencies are provided in frequency_list_descriptor. For sufficient signal strength, a terminal can test only its known frequencies, decode the corresponding transport stream, and check original_network _id and transport_stream _id in the same pair when the terminal has information on all possible center frequencies.

When the terminal crosses over the network boundary, the proved frequencies are not delivered on the same transport stream. The transport stream, on which Network Information Tables (NITs) for neighboring networks are delivered and lost, is also delivered from the neighboring networks. Then the terminal can search for the lost transport stream by testing frequencies given in other NITs.

If two Internet Protocol (IP) streams carry the same IP datagram streams, an IP/Medium Access Control (MAC) Information Notification Table (INT) can be used for a handover. In order to support a handover, INT announces all IP streams on the actual cell and on all adjacent/intersecting cells. The terminal uses the IP/MAC INT to check the availability of the IP service on other transport streams. Then the terminal checks the availability of the destination transport stream.

A change in service reception is possible in the following cases.

In a first case, the service reception changes to another IP platform in another cell having another transport stream. If one service is provided to two different transport streams with two different service_ids, the terminal cannot find it based on NIT. Because two transport streams belong to different platforms, the terminal cannot find the selected service even though the selected service exists in another transport stream.

In a second case, the service reception changes to another IP platform in another cell having a different transport stream in another network. If one service is provided from two networks with two different service_ids, the terminal cannot find it based on NIT because the two transport streams belong to different platforms. Therefore, the terminal cannot find the selected service even though the selected service exists in another transport stream.

In a third case, the IP platform changes within the same signal. In this case, the terminal wants to turn to another IP platform for the same service. That is, the same service is provided to two different IP platforms within one transport stream. Because service_id should be unique within one transport stream, even though both platforms have the same service, the service_id should be different. This means that the terminal can not find the same service with the service_id. In addition, because the same service is provided to two different IP platforms, the IP addresses can be different and IP platform_ids can also be different. This means that the terminal can not find the same service for handover using INT.

Although the concept of handover and roaming has not been clearly defined yet in the CBMS system, this is based on the change in IP platform, ESG provider, and network operator. Although the present invention provides movement of the terminal when the IP platform changes, this can be modified and applied according to another definition of the change in ESP provider, network operator, etc.

The term 'roaming' as used herein is given by way of example, and it can be changed to handover or any other term. Therefore, the term 'roaming' is used herein as an example of the change in IP platform and service. The terms used herein are subject to change.

When a terminal cannot use a specific service in one IP platform (ESG provider, network operator, etc.), the terminal tunes to another IP platform (ESG provider, network operator, etc.) when it still desires to use the service. This is roaming.

FIG. 5 shows a general roaming procedure. Upon receipt of an ESG of a neighboring network, a terminal should stop the current service to check presence/absence of a desired service. The terminal can move to the neighboring network for reception of the service when the desired service exists in the neighboring network. However, as shown in FIG 5, the terminal ends the current service being received via the home network (IP platform, ESG provider) in step 501, and receives an ESG of a neighboring network in step 502, and when a desired service is searched in the neighboring network, the terminal moves to the neighboring network and receives the searched service therefrom in step 503. However, because the terminal cannot receive the service for the time t1~t2, continuity of the service cannot be guaranteed.

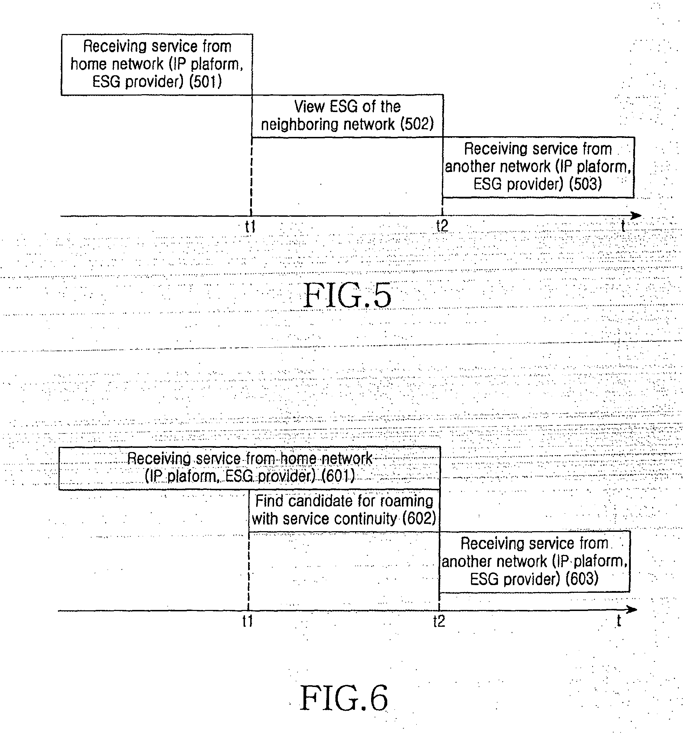

FIG. 6 shows a roaming procedure according to the present invention. According to the roaming procedure shown in FIG. 6, a terminal, while continuously receiving a service from the home network (IP platform, ESG provider) in step 601, searches for a candidate network (IP platform, ESG provider) for roaming in step 602, and when the candidate network is searched, the terminal moves to the searched candidate network and can continuously receive the same service in step 603. That is, the continuity of the service can be guaranteed.

The service continuity is related to the service content and the time difference. The service content from two different IP platforms (or ESG providers) can be classified into the following three types shown in Table 1.

**Table 1**

| Type | Description |
|---|---|
| 1. Identical | Identical service |
| 2. Variation | Variation in the same service |
| | 2.1 language variation |
| | 2.2 subtitle variation |
| | 2.3 camera variation |
| 3. Associated | Associated service |

The time difference can be classified into the following three types shown in Table 2.

**Table 2**

| Type | Delt T | Description |
|---|---|---|
| 1. Identical | 0 | No time difference between the services provided in two different IP platforms (or ESG providers) |
| 2. Ahead | (-)T | Service provided in another IP platform (or ESG provider) is transmitted in ahead of that provided in the current IP platform (or ESG provider). |
| 3. Behind | (+)T | Service provided in another IP platform (or ESG provider) is transmitted behind that provided in the current IP platform (or ESG provider). |

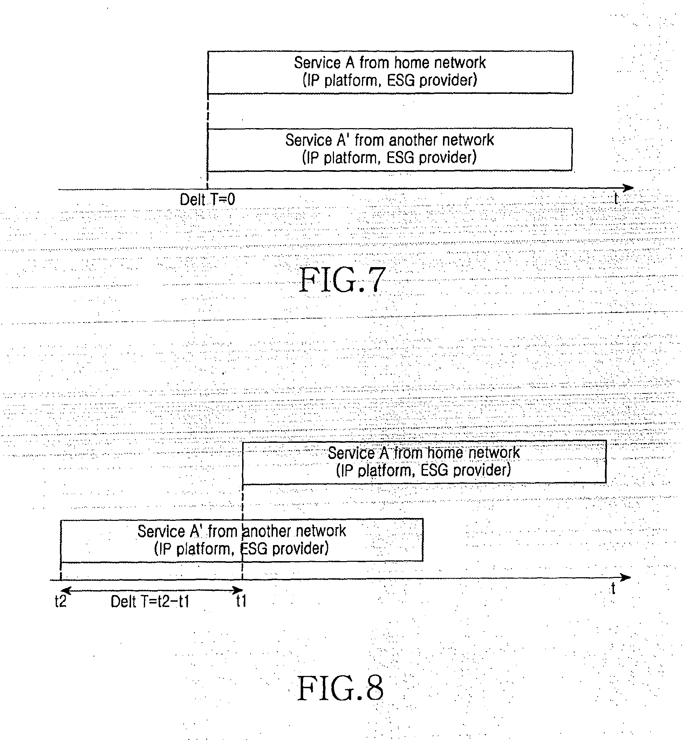

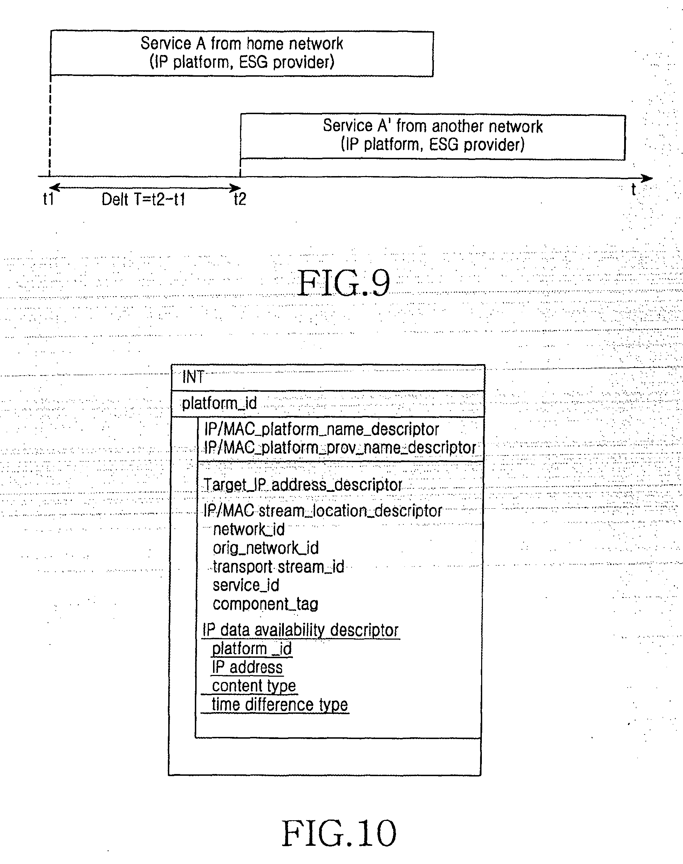

FIGS. 7 to 9 show three types of the time difference. FIG. 7 shows the time difference type for 'Identical', FIG. 8 shows the time difference type for 'Ahead', and FIG. 9 shows the time difference type for 'Behind'. To provide the time difference information, the service schedule can be provided in the foreign network.

Service mapping information can be summarized as shown in FIG. 3.

**Table 3**

| | Service A | Service A' |
|---|---|---|
| Mapping information | Service ID | Service ID' |
| | IP address | IP address' |
| | ESG provider ID | ESG provider ID' |
| | IP platform ID | IP platform ID' |
| | | Content type |
| | | Time difference type or schedule |
| | | Access information |

In Table 3, Service A is a service in the home network (IP platform, ESG provider), and Service A' is a mapping service in the foreign network (IP platform, ESG provider) for the Service A.

The access information includes corresponding frequency, transport stream, cell and network information and so on, and it can make it is easy for the terminal to find the desired service.

As described above, the service continuity issue can be classified into different types. In practice, the provided type information depends on condition and scenario.

For example, roaming is needed when a user consumes a service while moving to a service boundary of the current service. However, the user would like continuing the current service without any interruption. In this case, time differences are very important, and what the user wants is only the service with no time difference. Therefore, the terminal needs only information about a candidate service with a time difference = 0.

In another case, roaming will happen because a user travels around other countries. This often happens in Europe. The user does not consume one exact service without any interruption but he/she would like to know whether there is any same or similar service that is still available in the other network (IP platform, ESG provider) and the related information, because usually the user would like to consume some regular service even though he/she is out of his/her home network. If this expected information exits in the foreign ESG, the user can get the information by parsing the foreign ESG

However, there are some advantages when this information can be provided in the home network. First, the user does not need to wait until he/she arrives at the foreign network, and after the foreign ESG is parsed, he/she can get this information in advance and make some plans based on the information. Second, the information can save the process to parse the foreign ESG. For example, when the user moves to a foreign country and the ESG is in a different language, it will be not easy for the terminal to find the expected service. Therefore, it would benefit the user if related service information can be provided in advance, shown in Table 4 or Table 5.

**Table 4**

| Service list | Identifier in home network | Identifier in foreign network | Content type | Time difference type or schedule in foreign network | Access information |
|---|---|---|---|---|---|
| Service 1 | Service ID IP address | Service ID IP address | | | |
| Service 2 | Service ID IP address | Service ID IP address | | | |
| ... | | | | | |

**Table 5**

| Content type | Service list | Identifier in home | Identifier in foreign | Time difference type or schedule in foreign | Access information |
|---|---|---|---|---|---|
| identical | Service 1 | Service ID IP address | Service ID IP address | | |
| | Service 2 | Service ID IP address | Service ID IP address | | |
| | ... | | | | |
| variation | Service m | Service ID IP address | Service ID IP address | | |
| | ... | | | | |
| associated | Service n | Service ID IP address | Service ID IP address | | |
| | ... | | | | |

The service-related information brings benefits to users because such information helps users find the expected service more quickly and easily. In addition, the service-related information benefits operators because in this way it will attract more users to consume the service. The service-related information can be provided variably according to different condition and scenario.

Therefore, the present invention provides mapping information of the service among different IP platforms (or ESG provider, network operator). In practice, various solutions can be used to realize this concept. In the following description, two examples are provided to explain this idea. One is about mapping information in INT, and another is mapping information in ESG. In practice, parameters used in these examples can be modified as desired.

Descriptions will now be made of service mapping methods according to the present invention.

According to one example of the present invention, mapping information for service identifiers between IP platforms is provided to a terminal. When there is one reference service and an IP platform assigns a service identifier serviceID (an IP-level identifier on ESG) for this service, IP addresses are arranged in their associated programs belonging to this service. The programs have unique transport stream-based service identifiers service_ids assigned in PSI/SI. Therefore, one program may have different service identifiers assigned by different entities. When the IP platform delivers mapping information between the service identifiers to the terminal using INT included in PSI/SI, the terminal, based on this information, can determine the overall situation related to the service identifier information assigned to the service selected by the user.

Mapping information for the same or similar service within different platforms (or ESG providers) can be given for roaming support. It is possible to list different IP addresses for the same service in different IP platforms, as shown in Table 6.

Table 6 shows mapping information for service identifiers between IP platforms.

**Table 6**

| | platform_id (actual) | platform_id (other) | Content_type | Time difference type |
|---|---|---|---|---|
| Service | IP address in actual platform | IP address in other platform | 1. identical | |
| | | | 2. variation | |
| | | | 3. associated | |

From the mapping information of Table 6, a terminal can know whether a selected service is available in another platform. When the availability information does not exist in the mapping information, the selected service is not available in another platform. In this case, the user does not need to waste time searching other IP platforms for the desired service. When the availability information exists, the terminal can know, from the mapping information, the corresponding service_id or IP address for the same service in another platform. Therefore, the terminal can search for the desired service directly without viewing and selecting by the user. In this way, the terminal can turn to another IP platform with service continuity.

The mapping information of Table 6 can be inserted in INT as shown in FIG. 10. A new descriptor "IP data availability descriptor" for mapping information is added. "IP data availability descriptor" lists mapping services in all other IP platforms. Platform_id is an ID of the IP platform, and IP address is an IP address of the service in the IP platform. 'Content type' indicates whether the mapping information corresponds to 'identical', 'variation', or 'associated'. The "IP data availability descriptor" is a loop and can list all candidate service mapping information in other IP platforms.

One same or similar candidate service is given. That is, when there are more than one candidate services, the related information is listed in the IP data availability descriptor. In addition, an information format can be different for each service, and can be given in a different way for each content type or time difference type.

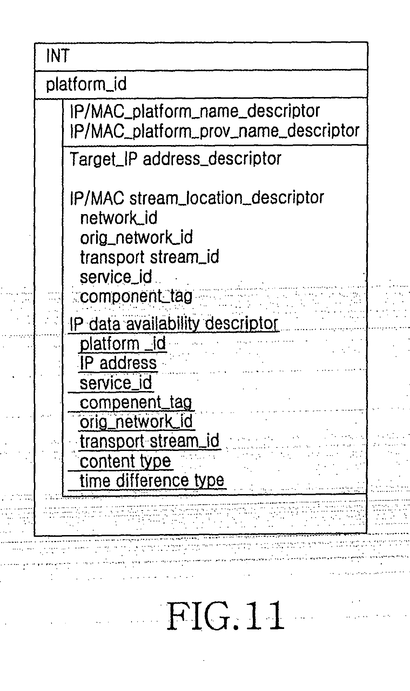

Except this information, corresponding frequency, transport stream, cell and network information can also be additionally provided to make it is easy for the terminal to find the expected service, as shown in FIG. 11.

In FIGS. 10 and 11, platform_id indicates a label to identify a given IP/MAC platform, IP/MAC_platform_name_descriptor provides a name of the IP/MAC platform. IP/MAC_platform_provider_name_descriptor provides a name of the IP/MAC platform provider, and Target_IP_address_descriptor provides a target of a single, or a group of receiver devices. IP/MAC stream_location_descriptor locates an IP/MAC stream in a DVB network via the parameters network_id.

In addition, original_network _id gives a label for identifying network _id of the originating delivery system, transport_stream _id serves as a label for identifying the present document from any other multiplex within the delivery system, and service_id serves as a label to identify the current service from any other service within the transport stream. The service_id is equivalent to program_number in the corresponding program_map_section. Further, component_tag identifies the component stream for associating the component stream with a description given in a component descriptor. Within a program map section, each stream identifier descriptor has a different value for this field. IP data availability descriptor is added in INT. When the same service is available in another IP platform, corresponding platform_id is given here. The IP address for this service in another IP platform is also given. This new descriptor helps the terminal continue the selected service from one IP platform to another. IP data availability descriptor provides the mapping information for the same service in other IP platforms, and platform_id indicates a label to identify another IP platform providing same service. IP_address is an allocated IP address for the same service in other IP platform, original_network_id gives the label identifying the network_id of the originating delivery system, and transport_stream_id is a transport stream including the corresponding platform. Content type is used for some additional information for the corresponding service, and the content type can be 'identical', 'variation', or 'associated'. Time difference type describes a time difference between the services from different IP platforms.

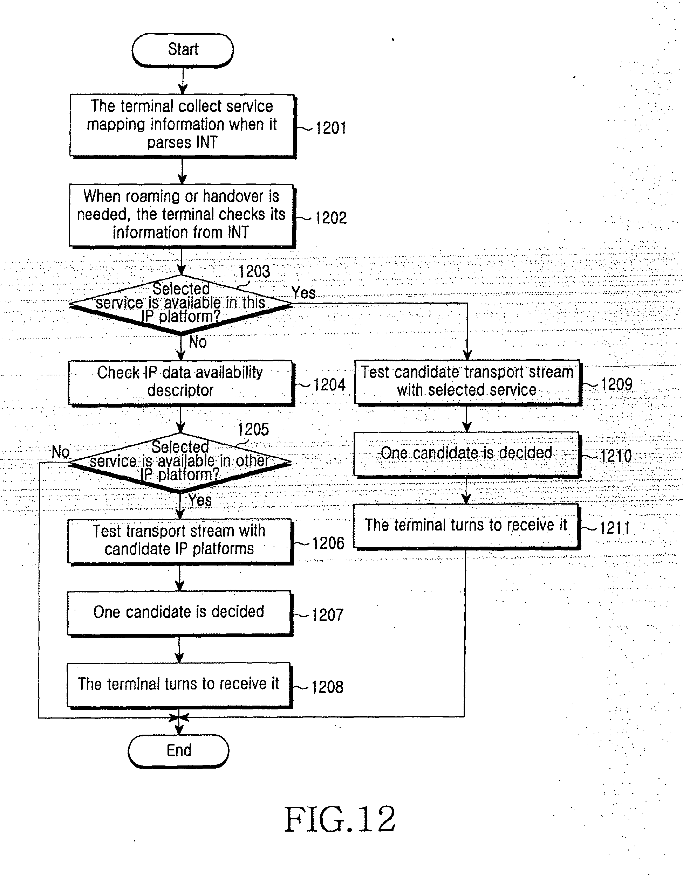

FIG. 12 shows an operating procedure of a terminal according to this example of the present invention. In step 1201, a terminal collects service mapping information when it parses INT. If roaming or handover is needed, the terminal checks a selected service in INT in step 1202. The terminal determines in step 1203 whether the selected service is available within this IP platform. When the selected service is not available within this IP platform, the terminal finds another IP platform that offers the selected service, and the IP address of the selected service in other IP platform through IP data availability descriptor in steps 1204 and 1205. In step 1206, the terminal monitors a transport stream with candidate IP platforms. When one candidate is decided in step 1207, the terminal turns to the decided candidate to receive it in step 1208.

According to another example of the present invention, mapping information for the same service within different platforms can be given to a terminal through ESG. That is, it is possible to list the mapping serviceID, IP address used for the same service in different IP platforms and ESG providers, and the relationship between their contents, indicating whether the service is totally identical, or has some variation. The time difference, indicating whether the service delivery time is identical, or the foreign on is delivered in ahead, or behind, and the schedule of the mapping service can also be listed. In addition, the access information that is about corresponding frequency, transport stream, cell and network information for the mapping service can also be provided, and it can make it is easy for the terminal to find the expected service.

The service mapping information is shown in Table 7.

**Table 7**

| | Service A | Service A' |
|---|---|---|
| Mapping information | Service ID | Service ID' |
| | IP address | IP address' |
| | ESG provider ID | ESG provider ID' |
| | IP platform ID | IP platform ID' |
| | | Content type |
| | | Time difference or schedule |
| | | Access information |

From the mapping information, the terminal can know whether a selected service is available in another ESG provider and/or IP platform. When the selected service does not exist in the mapping information, the selected service is not available in another ESG provider and/or IP platform. Therefore, the user does not need to waste time to search other ESG for the desired service. However, when the selected service is available in another ESG provider and/or IP platform, the terminal, from the mapping information, can know the corresponding serviceID or IP address for the same service in another platform and ESG provider. The terminal can search the information directly. In this way, the terminal can turn to another ESG provider and/or IP platform with service continuity.

The mapping information can be added to the service fragment, the acquisition fragment, or another relevant fragment. Alternatively, the mapping information can be inserted in ESG as an independent fragment, and can then be delivered.

When there are more than one mapping services, mapping information of the services can be listed with elements as shown in Table 8, or can be generated based on different content types and time difference types. The format is not restrictive, but can be freely modified as the provider wishes.

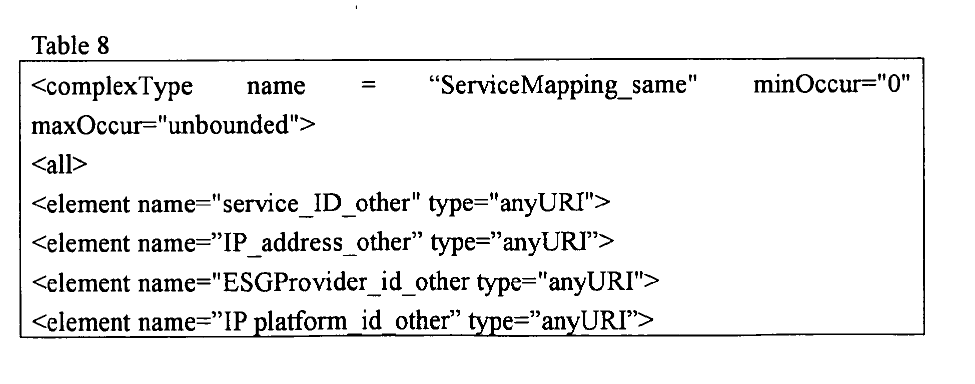

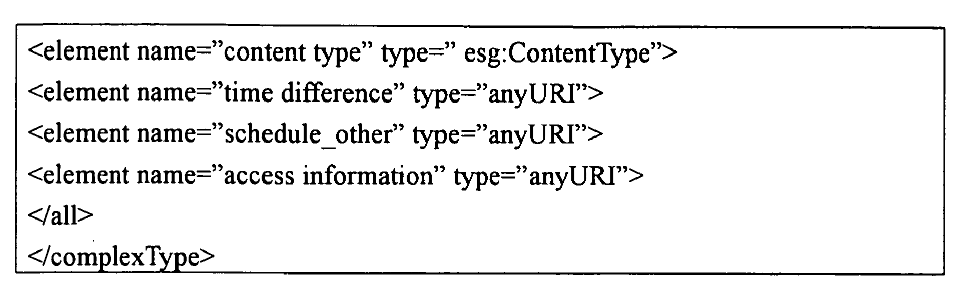

Content type can use ClassificationScheme as shown in Table 9.

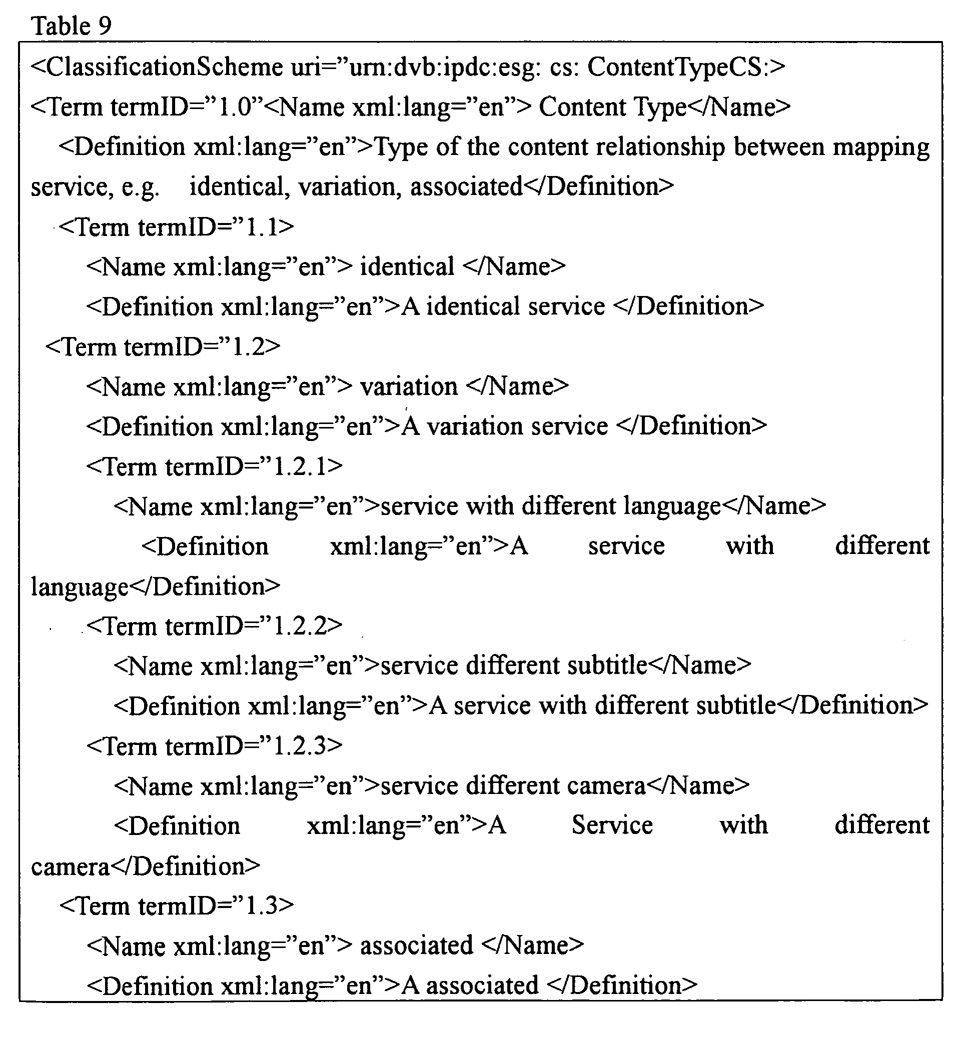

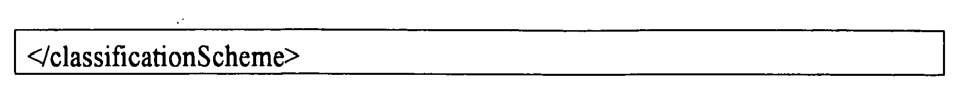

Time difference can be expressed as shown in Table 10.

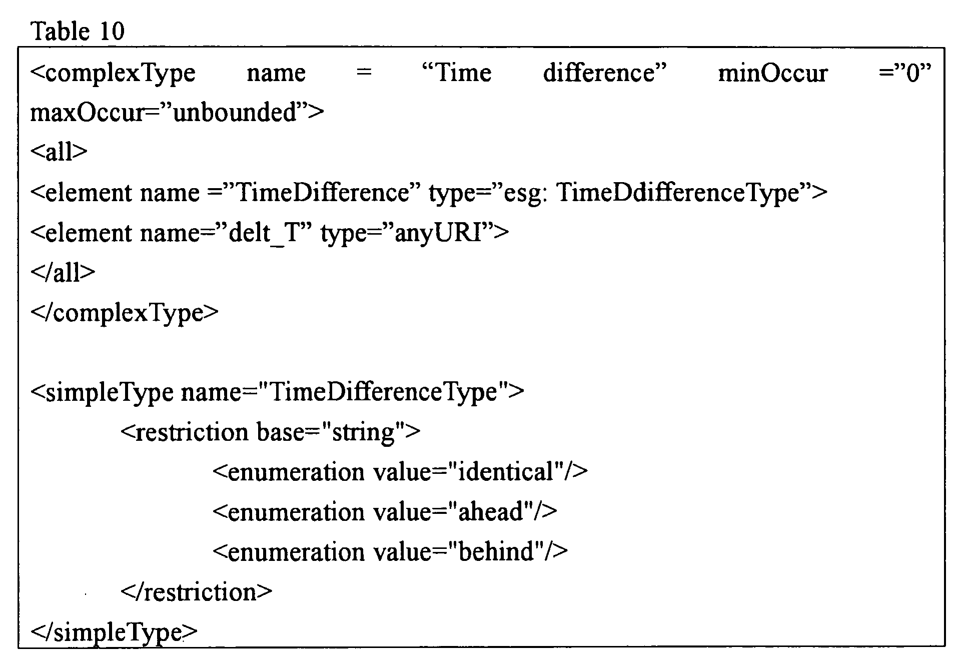

In addition, mapping information for all services can be collected for each service as shown in Table 11. 'Number of service' indicates the number of services providing the mapping information, and 'number of mapping service' indicates the number of mapping services for each service.

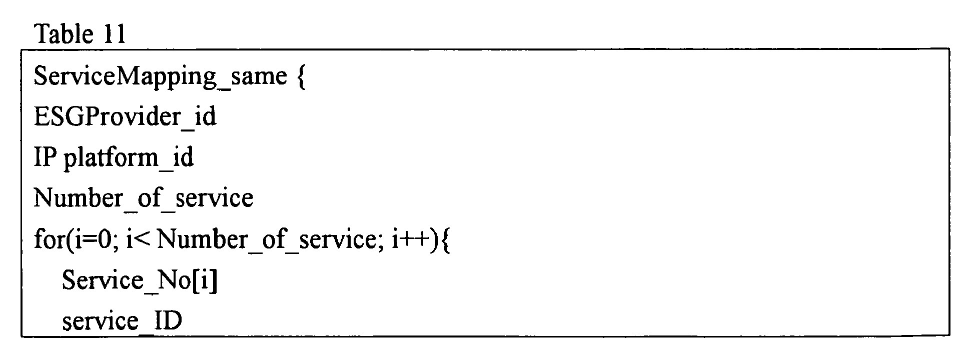

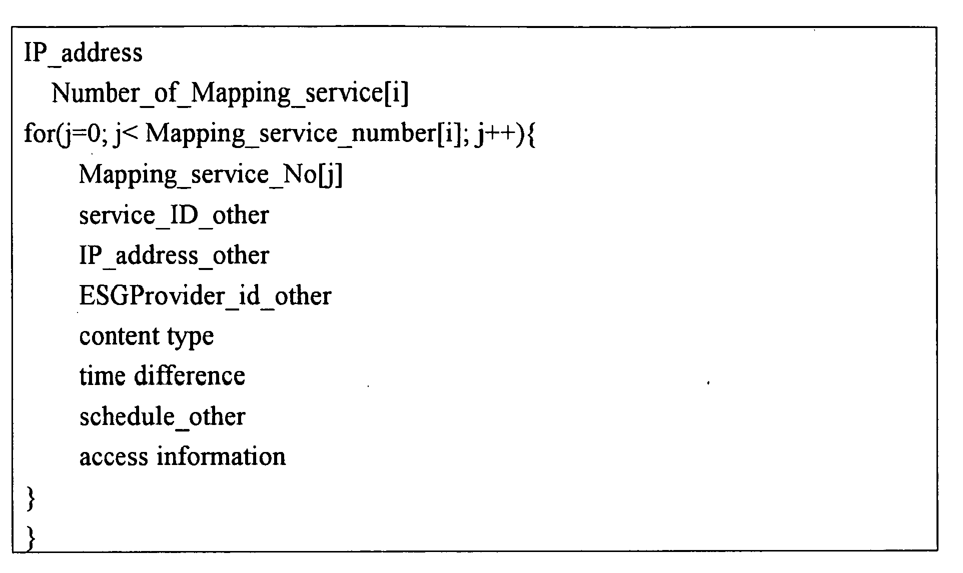

In Table 11, the information format can be modified for each individual content type, and the present invention is not limited to this. In addition, the collected service mapping information can be added to the existing service fragment or a new fragment. Alternatively, the collected service mapping information can be added to an independent ESG.

ESG carrying the mapping information can be delivered via a broadcast network or an interactive network. When the service mapping information is carried on an independent ESG, the indication information and access information can be carried on an ESG bootstrap.

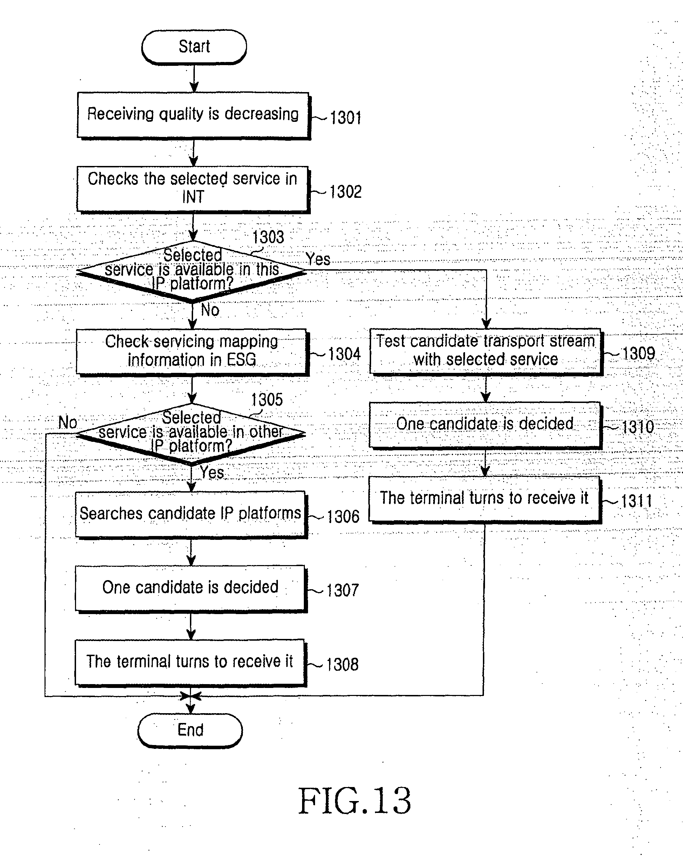

FIG 13 shows an operating procedure of a terminal according to this example of the present invention. Upon detecting a decrease in the receiving quality in step 1301, a terminal checks a selected service in INT in step 1302. The terminal determines in step 1303 whether the selected service is available within this IP platform. When the selected service is not available within this IP platform, the terminal finds other IP platform that offers the selected service through service mapping information in ESG, in steps 1304 and 1305. Thereafter, the terminal searches candidate IP platforms in step 1306. When one candidate IP platform is decided in step 1307, the terminal turns to the decided candidate IP platform to receive the selected service in step 1308.

However, when it is determined in step 1303 that the selected service is available within the corresponding IP platform, the terminal tests a candidate transport stream having the selected service in step 1309. When one candidate transport stream is selected in step 1310, the terminal turns to the corresponding candidate transport stream in step 1311.

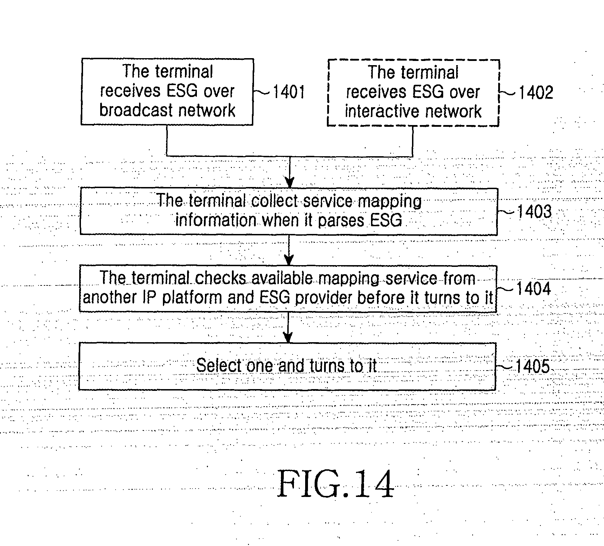

FIG. 14 shows another operating procedure of a terminal according to this example of the present invention. A terminal receives ESG from a broadcast network or an interactive network in steps 1401 and 1402, and collects serving mapping information in step 1403 when the terminal parses the ESG. In this way, the terminal can acquire related mapping information of another IP platform and ESG provider, and their related and access information. When reception change is needed in step 1404, the terminal checks a mapping service from another IP platform and ESG provider. Further, the terminal selects one of the mapping services, and then turns to another IP platform or ESG provider to receive the selected service.

The mapping information can also be carried in a special ESG, and the access information of the special ESG can be indicated in the bootstrap. The mapping information can be delivered in a broadcast manner, or using an interactive ESG. The mapping information can also be delivered by notification.

The mapping information can also be carried in the notification message. In the head of the notification message it can be indicated that the corresponding notification is about service mapping information. The mapping information can also be carried in the other messages, and the terminal can send to the network a request for a message for carrying the mapping information, and receive the message from the network.

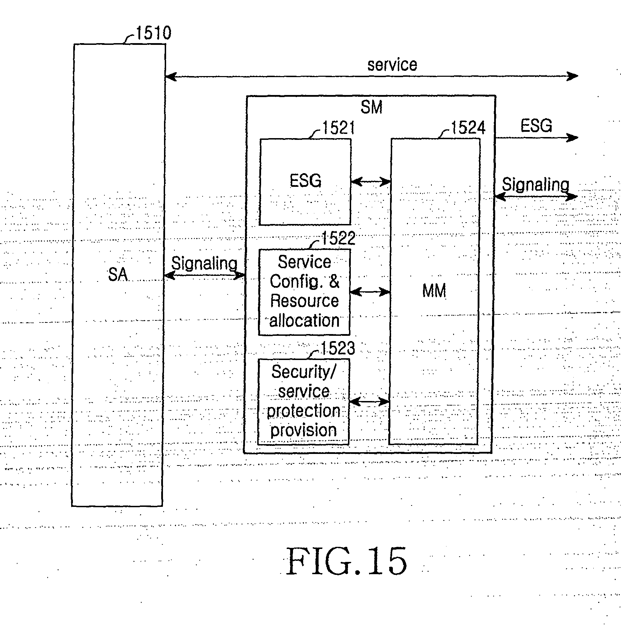

FIG. 15 shows a network according to the present invention. In order to provide a specific service application, a Service Application (SA) 1510 gathers contents from multiple sources and their associated metadata, provides head-end application logic, provides content encoded in the format understood by a terminal via streaming or file carousel delivery, and generates metadata to be used in the ESG The SA 1510 can exist for each application provided in IP Datacast.

A Service Management (SM) 1520 includes, as its lower entities, an ESG provision unit 1521, a service configuration & resource allocation unit 1522, a security/service protection provision unit 1523, and a Mobility Management (MM) unit 1524. The MM unit 1524 can support the roaming process through communication with the other three entities 1521 to 1523, exchange roaming proposals and responses, support the roaming process through communication with other entities and lower entities, and communicate with a mobility management unit of another network for information exchange. The service configuration & resource allocation unit 1522 registers service applications that make a competition to obtain a bandwidth for a broadcast bearer, allocates services to the point and bandwidth related to the broadcast network type, and schedules services over the time. The ESG provision unit 1521 gathers ESG (metadata information) fragments from the Service Applications 1510. The security/service protection provision unit 1523 manages user access to the Service Applications 1510.

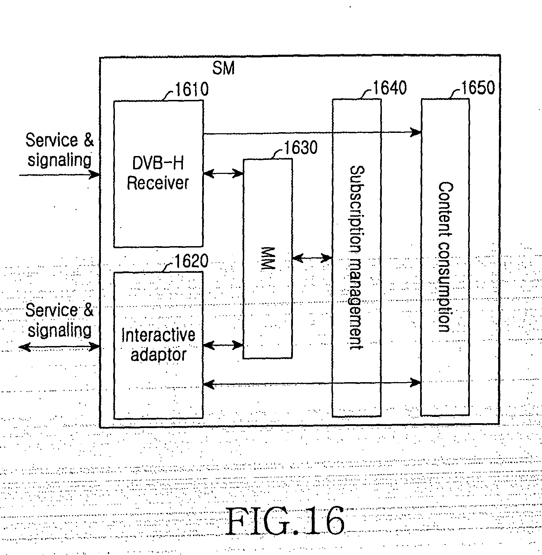

FIG. 16 shows a terminal according to the present invention. A DVB-H receiver 1610 is responsible for reception and restoration of the DVB-H broadcast signals. An interactive adaptor 1620 is responsible for provisioning of services with use of the mobile communication network. A Mobility Management (MM) unit 1630 manages a change in the receiving environment due to movement of the terminal. A subscription management unit 1640 manages right acquisition, continues to pursue the right acquired for the terminal, and manages decoding of the service content. A content consumption unit 1650 sends the received broadcast service to the user.

As can be understood from the foregoing description, the DVB-H CBMS system provides, to the terminal, mapping information between different service identifiers assigned to the same service, thereby guaranteeing service continuity for the terminal.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for providing a broadcast service to a terminal by a network in a Digital Video Broadcasting-Handheld (DVB-H) Convergence of Broadcasting and Mobile Service (CBMS) system, the method comprising:
generating Program Specific Information/Service Information (PSI/SI) indicative of information related to a broadcast service requested by the terminal;
generating mapping information for information on the broadcast service in an Internet Protocol (IP) platform from which the terminal is currently receiving the broadcast service, and for information on a broadcast service corresponding to the broadcast service in IP platforms other than the IP platform; and
including the generated mapping information in an IP/Medium Access Control (MAC) Information Notification Table (INT) of the PSI/SI, and delivering the INT to the terminal.

2. The method of claim 1, wherein the mapping information comprises identification information of an IP platform providing the corresponding broadcast service, an IP address, a content type, and time information.

3. The method of claim 2, wherein the content type indicates a relationship between the corresponding broadcast service and the broadcast service.

4. The method of claim 2, wherein the time information indicates a difference between a time the broadcast service is provided and a time the corresponding broadcast service is provided.

5. The method of claim 1, wherein the mapping information further comprises identification information of the corresponding broadcast service, identification information of a network where the terminal is currently located, transport stream identification information, and frequency information.

6. A method for receiving a broadcast service from a network by a terminal in a Digital Video Broadcasting-Handheld (DVB-H) Convergence of Broadcasting and Mobile Service (CBMS) system, the method comprising:
receiving service mapping information between Internet Protocol (IP) platforms by parsing an IP/Medium Access Control (MAC) Information Notification Table (INT);
determining to move to another network, and checking the received service mapping information;
determining whether a broadcast service desired by the terminal is available in a current IP platform, and selecting another IP platform providing the desired broadcast service based on the service mapping information when the desired broadcast service is not available in the current IP platform; and
turning to the selected IP platform and continuing to receive the desired broadcast service.

7. The method of claim 6, wherein the mapping information comprises identification information of an IP platform providing the corresponding broadcast service, an IP address, a content type, and time information.

8. The method of claim 6, wherein the content type indicates a relationship between the corresponding broadcast service and the broadcast service.

9. The method of claim 6, wherein the time information indicates a difference between a time the broadcast service is provided and a time the corresponding broadcast service is provided.

10. The method of claim 6, wherein the mapping information further comprises identification information of the corresponding broadcast service, identification information of a network where the terminal is currently located, transport stream identification information, and frequency information.

11. A method for providing a broadcast service to a terminal by a network in a Digital Video Broadcasting-Handheld (DVB-H) Convergence of Broadcasting and Mobile Service (CBMS) system, the method comprising:
generating an Electronic Service Guide (ESG) indicative of information related a broadcast service requested by the terminal;
generating mapping information for information on the broadcast service in an Internet Protocol (IP) platform from which the terminal is currently receiving the broadcast service, and for information on a broadcast service corresponding to the broadcast service in IP platforms other than the IP platform; and
including the generated mapping information in the ESG, and delivering the ESG to the terminal.

12. The method of claim 11, wherein the mapping information comprises identification information of an IP platform providing the corresponding broadcast service, an IP address, a content type, and time information.

13. The method of claim 12, wherein the content type indicates a relationship between the corresponding broadcast service and the broadcast service.

14. The method of claim 12, wherein the time information indicates a difference between a time the broadcast service is provided and a time the corresponding broadcast service is provided.

15. The method of claim 11, wherein the mapping information is carried in one of a service fragment and an acquisition fragment in the ESG

16. The method of claim 11, wherein the mapping information is carried in a separate ESG other than the ESG including the service related information.

17. The method of claim 11, wherein the ESG including the mapping information is delivered via a broadcast network or an interactive network.

18. A method for receiving a broadcast service from a network by a terminal in a Digital Video Broadcasting-Handheld (DVB-H) Convergence of Broadcasting and Mobile Service (CBMS) system, the method comprising:
checking information on the broadcast service from an IP/Medium Access Control (MAC) Information Notification Table (INT) when receiving quality of the broadcast service decreases below a threshold;
determining whether the broadcast service desired by the terminal is available in a current Internet Protocol (IP) platform, and checking service mapping information from an Electronic Service Guide (ESG) when the desired broadcast service is not available in the current IP platform;
selecting another IP platform providing the desired broadcast service based on the service mapping information; and
turning to the selected IP platform, and continuing to receive the desired broadcast service.

19. The method of claim 18, wherein the mapping information comprises identification information of an IP platform providing the corresponding broadcast service, an IP address, a content type, and time information.

20. The method of claim 19, wherein the content type indicates a relationship between the corresponding broadcast service and the broadcast service.

21. The method of claim 19, wherein the time information indicates a difference between a time the broadcast service is provided and a time the corresponding broadcast service is provided.

22. The method of claim 18, wherein the mapping information is included in a service fragment or an acquisition fragment in the ESG.

23. The method of claim 18, wherein the mapping information is carried in a separate ESG other than an ESG including the service related information.

24. The method of claim 18, wherein the ESG including the mapping information is delivered via a broadcast network or an interactive network.

25. A network apparatus for providing a broadcast service to a terminal in a Digital Video Broadcasting-Handheld (DVB-H) Convergence of Broadcasting and Mobile Service (CBMS) system, the apparatus comprising:
a service application unit for collecting contents from sources and their associated metadata to provide an application for a specific service;
an Electronic Service Guide (ESG) provision unit for generating an ESG for a broadcast service from the metadata collected from the service application unit; and
a mobility management unit for managing movement to another network by the terminal;
wherein the network apparatus delivers service mapping information for a broadcast service, corresponding to the broadcast service currently received at the terminal, provided in another Internet Protocol (IP) platform, to the terminal using one of Program Specific Information/Service Information (PSI/SI) and the ESG.

26. The network apparatus of claim 25, wherein the mapping information comprises identification information of an IP platform providing the corresponding broadcast service, an IP address, a content type, and time information.

27. A terminal apparatus for receiving a broadcast service from a network in a Digital Video Broadcasting-Handheld (DVB-H) Convergence of Broadcasting and Mobile Service (CBMS) system, the apparatus comprising:
a broadcast receiver for receiving a broadcast service or signal from a broadcast network;
an interactive adaptor for receiving an interactive service or signal from an interactive network; and
a mobility management unit for managing movement to another network;
wherein the terminal apparatus receives Program Specific Information/Service Information (PSI/SI) for the broadcast service through the broadcast receiver, receives an Electronic Service Guide (ESG) for the broadcast service through the broadcast receiver or the interactive adaptor, and receives service mapping information for a broadcast service, corresponding to the broadcast service currently received at the terminal, provided in another IP platform, the service mapping information being included in one of the PSI/SI and the ESG.

28. The terminal apparatus of claim 27, wherein the mapping information comprises identification information of an IP platform providing the corresponding broadcast service, an IP address, a content type, and time information.
